# EUROPÄISCHE PATENTSCHRIFT

(11) **EP 2 708 294 B1**
(45) Veröffentlichungstag und Bekanntmachung des Hinweises auf die Patenterteilung: **07.11.2018**
(21) Anmeldenummer: 13183284.2
(22) Anmeldetag: 06.09.2013
(51) Int. Cl.: B21D 22/02, B21D 53/90, B60G 21/05

(54) **Verfahren zur Herstellung eines Torsionsprofils**
Method for producing a torsion profile
Procédé de fabrication d'un profil de torsion

(30) Priorität: 13.09.2012 DE 102012108544
(43) Veröffentlichungstag der Anmeldung: 19.03.2014
(73) Patentinhaber: Johannes Meier Werkzeugbau GmbH, 33161 Hövelhof (DE); Toepker, Dieter, 16548 Glienicke-Nordbahnhof (DE)
(72) Erfinder: Toepker, Dieter, 16548 Glienicke-Nordbahnhof (DE)
(74) Vertreter: Weisse, Renate

(56) Entgegenhaltungen:
- EP-A1- 2 446 977
- DE-A1-102009 031 981
- JP-A- 2007 237 784

## Beschreibung

### Technisches Gebiet

Die Erfindung betrifft ein Verfahren zur Herstellung eines Torsionsprofils für Verbundlenkerachsen von Kraftfahrzeugen, gemäß dem Oberbegriff des Patentanspruchs 1.

Solch ein Verfahren ist z.B. in der DE-A-10 2009 031 981 offenbart. Verbundlenkerachsen weisen einen möglichst biegesteifen und torsionsweichen Querträger auf, welcher an jedem Ende mit einem Längslenker verbunden ist. Die Längslenker nehmen an einem Ende einen Radträger auf und sind mit ihrem anderen Ende am Fahrzeugaufbau angebunden.

### Stand der Technik

Üblicherweise werden solche Torsionsprofile entweder einwandig aus Flachmaterial oder aus Rohrstücken zu doppelwandigen, gewichtsoptimierten Profilquerschnitten hergestellt. Bei der doppelwandigen Konstruktion wird von einem Rohr ausgegangen, das mit einem Formstempel in eine Matrize mit der entsprechenden Endkontur zu einem doppelwandigen U oder V mit einem definierten Luftspalt zueinander eingepresst wird. Dabei wird die nach außen gewölbte Rohrwandung des dem Stempel zugewandten Rohrteils nach innen gewölbt. Am Ende hat der mit dem Stempel zusammengepresste Teil des Rohres einen U-förmigen, doppelwandigen Querschnitt. Der Stempel ist kürzer als die Länge des zu formenden Profils der Verbundlenkerachse. Die äußeren Enden des Profils bleiben daher im Wesentlichen unverändert. Sie können in ihrem Querschnitt entweder kreisrund sein oder erhalten beim Formen jeweils den Anforderungen entsprechend eine andere angeformte Kontur. Eine solche Kontur kann oval sein oder einen anderen Querschnitt haben, welcher der Anschlusskontur an den Längslenker entspricht.

Die aus Rohrstücken hergestellten Verbundlenkerachsen haben im Gegensatz zu den 1-wandigen Profilen eine gewichtsoptimierte Kontur bei gleicher Torsion und Biegesteifigkeit. Der Materialeinsatz ist geringer, da die offenen Enden als geschlossene Hohlprofile ein wesentlich höheres Widerstandsmoment aufweisen als die einwandigen offenen Profile an ihren Enden. Dadurch sind keine Verstärkungsbleche notwendig.

Die beschriebenen Verbundlenkerachsen sind unter anderem in Patenten und Patentanmeldungen der Benteler Automobiltechnik GmbH bzw. Benteler AG offenbart. Beispiele für vorveröffentliche Druckschriften dieses Unternehmens sind EP 1 318 036 B1, EP 1 228 906 B1; EP 1160 108 B1 und EP 1 081 237 B1.

EP 1 081 237 B1 offenbart ein Verfahren zur Herstellung eines Rohrprofils als Querträger für eine Verbundlenkerhinterachse, bei welchem ein Rohr aus einem Vergütungsstahl im mittleren Längenabschnitt durch eine U-förmige Kaltverformung torsionsweich gestaltet wird und anschließend einer Warmbehandlung unterzogen wird.

EP 1 318 036 B1 offenbart ein Verfahren zur Herstellung eines Querträgers aus einem Metallband oder einer ebenen Platine. Das Metallband wird kontinuierlich einer Profilieranlage zugeführt. Nach dem Profilieren wird das Profil zu einem mit einer Längsschweißnaht geschlossenen Körper verschweißt. Das Profil ist ein Rollformteil, das in einem kontinuierlich über seine axiale Länge zu einem gleichmäßig geformten Querschnitt hergestellt wird. Nach weiteren Behandlungsschritten wird die erforderliche Länge abgeteilt. Nicht offenbart, aber selbstverständlich erforderlich ist die weitere Bearbeitung der Enden eines so hergestellten Querträgers. Das Verfahren erfordert eine Vielzahl von Bearbeitungsschritten und ist aufwändig.

JP 2007 237784 A offenbart ein Verfahren zur Herstellung eines Torsionsprofils, bei dem aus einem planen Material zunächst ein kreisrundes Rohr geformt wird und anschließend aus dem Rohr ein Torsionsprofil.

EP 2 446 977 A1 offenbart ebenfalls ein Verfahren zur Herstellung eines Torsionsprofils, bei dem aus einem Rohr ein Torsionsprofil hergestellt wird. Dabei wird der Stahl in einem ersten Verfahrensschritt austenitisiert und in einem zweiten Verfahrensschritt unter Beibehalt der Enden mit kreisrundem Querschnitt der mittlere Bereich mittels eines Werkzeugober- und -unterteils zu einem U-förmigen Querschnitt warm umgeformt.

Nachteilig bei allen bekannten Verfahren ist es, dass die Verformung unter Verwendung einer Rollbewegung des Materials in einem relativ engen Radius am Umlenkpunkt zwischen Innen- und Außenwand des doppelwandigen U- oder V-Profils erfolgt. Dabei wird beim Umlenkrollen die innenliegende Materialfaser, die Oberflächen-nahen Körner der Mikrostruktur, zunächst beim Einlaufen in den jeweiligen Umlenkradius gestaucht. Anschließend wird sie beim Auslaufen aus dem Umlenkradius gestreckt. Diese gegenläufige Formung ist eine extreme Belastung der Oberflächen-nahen Mikrostruktur. Dadurch können Oberflächenfehler, wie Riefen und/oder kleinste Kratzer oder Krater zu Mikrorissen aufgeweitet werden. Mikrorisse reduzieren die Lebendauer des Profils signifikant. Die Fehlerfindung durch heute bekannte, technische Fehlerprüfverfahren, wie Ultra-Schall- oder/und Streufluß-Prüfung, ist bedingt durch die Lage der Fehler auf der Innenseite des Hohlprofils und durch die Position nahe dem Umlenkpunkt nur schwer oder nicht realisierbar. Die Lebensdauer eines solchen Profils wird hierdurch schwer kalkulierbar.

Der Stempel und die gegenüberliegende Matrize haben während des Prozessablaufs zu dem zu formenden Rohrrohling nur auf der dem Werkzeug zugewandten Oberfläche direkten Kontakt. Die innen liegende Oberfläche des Rohrrohlings bleibt während der gesamten Formgebung ohne Kontakt zum Stempel oder zur Matrix. Dabei liegt der Formstempel nur an der Innenwand an. Die Matrize berührt die Außenwand. Die beiden Umlenkpunkte mit ihren Umfängen der Rollradien liegen während der Formgebung frei. Es erfolgt keine Berührung durch den Stempel oder die Matrix.

Wenn der Stempel in seine maximal unterste Fahrposition bezüglich seiner Abwärtsbewegung gebracht wird, besteht die Möglichkeit über den Stempel die freigeformten Umlenkradien nachträglich zu einer geänderten Kontur zu prägen. Das ermöglicht eine annähernd freie Formgebung. Damit kann eine Werkstoff- wie auch werkzeugtechnisch begrenzte komplexe Formgebung realisiert werden. Werkstofftechnisch liegt hier somit überwiegend ein zweiachsiger Spannungszustand vor, durch den sich hohe Fließgrenzen ergeben. Werkzeugtechnisch gesehen ist die Komplexität der Endkontur als Möglichkeit der verbesserten Funktionalität und Lebensdauer begrenzt durch die nahezu komplette Freiformgebung.

Der Stempel liegt nur an kleinen Oberflächenabschnitten an und rollt, presst oder streckt die benachbarten Oberflächenabschnitte. In diesen benachbarten Oberflächenabschnitten erfolgt also nur eine mittelbare Kraftübertragung.

Ein besonderer Nachteil ist es dabei, dass diese Fehler oder Schwachstellen auch im Innenbereich der geschlossenen Doppelwandung auftreten können. Sie sind dann nur mit teuren Verfahren zu detektieren und bleiben in der Regel unbeobachtet.

DE 10 2009 031 981 A1 offenbart ein Verfahren zur Herstellung eines Torsionsprofils aus einer rechteckigen, planen Platine. Die Platine wird mit einer im Querschnitt U-förmigen Mulde versehen und dann die Schenkel umgebogen. Die Längskanten der Schenkel werden dann miteinander gefügt, so dass sich das gewünschte Profil ergibt.

### Offenbarung der Erfindung

Es ist Aufgabe der Erfindung, ein kostengünstiges Verfahren zur Herstellung eines Torsionsprofils zu schaffen, das eine komplexere Formgebung bei hoher Stabilität ermöglicht, und das Entstehen von Oberflächenfehlern, wie Riefen und Kratzer vermeidet oder prozesssicher erfassbar macht. Erfindungsgemäß wird die Aufgabe durch ein Verfahren der eingangs genannten Art gelöst, bei dem das Formen gemäß Schritt (e) gekennzeichnet ist durch die Schritte:
(g) kaltes Vorformen des noch nicht verschlossenen Werkstücks,
(h) Erhitzen des Werkstücks auf eine Temperatur oberhalb des AC3-Punktes, wenigstens oberhalb 800°C, und
(i) Formen des noch nicht verschlossenen, heißen Werkstücks mit kalten und/oder gekühlten Formstempel, wobei der Formstempel jeweils nur an dem Teil des Werkstücks anliegt, der bei diesem Schritt seine endgültige Form erhält.

Das kalte Vorformen des Werkstücks kann in mehreren Zieh- und Formstufen erfolgen. Insbesondere kann das Vorformen über die gesamte Länge des Hohlprofils erfolgen.

Die Temperatur, auf welche die Platine erhitzt wird, hängt von den Legierungselementen, speziell vom Kohlenstoffgehalt des Werkstoffs ab und liegt oberhalb des AC3 Punktes im Kohlenstoffdiagramm. Bei dieser Temperatur wird Ferrit in Austenit umgewandelt. Bei 22MnB5, beispielsweise, wird die Platine auf eine Temperatur im Bereich von 920°C erwärmt. Das Erhitzen des Werkstücks erfolgt in einem Ofen, der induktiv oder konduktiv auf eine Temperatur von Ac3 + 50 bis 80°C.

Die erhitzte Platine wird zum partiellen Presshärten der inneren U-Kontur zur fertigen Endkontur eingelegt, wobei die Presshärteformgebung über den Umschlagpunkt der äußeren U-Kontur erfolgt. Dies bewirkt ein zeitnahes Abschrecken in einem kalten oder gekühlten Warmformwerkzeug zur Erzielung eines 100%-gen Martensit-Gefüges. Der geformte Bereich liegt an der Warmformwerkzeugkontur an. Die offenen Längsseiten kühlen ohne direkten Werkzeugkontakt an Luft ab, wobei ein Mischgefüge aus Ferrit, Perlit und ggf. Bainnit erzeugt wird. Diese offenen Längsseiten bleiben auch nachträglich formbar.

Vor der Weiterbearbeitung wird die Platine auf Raumtemperatur abgekühlt. Die Kanten an den offenen Längsseiten des Hohleprofils werden gemäß der notwendigen Anschlusskontur für die Verbindung der Kanten fertigbeschnitten. Dabei werden die längsseitigen Enden zum geschlossenen Hohlprofil geschlossen, so dass die Längskanten für den nachgeschalteten Fügeprozess voreinander stehen. Die Verbindung kann beispielsweise durch Schweißen erfolgen.

Die Härtung des Werkstücks erfolgt partiell und umfasst den inneren U-Bereich und den Umschlagbereich zum äußeren U des Profilbereichs, in dem die maximalen kritischen Biegespannungen auftreten. Die U-Kontur wird direkt entsprechend der eingebrachten Kontur geformt und gehärtet und kann nach dem Abkühlen auf der Innenseite des Hohlprofils als Zwischenschritt oberflächenbearbeitet werden. Eine solche Oberflächenbearbeitung kann zum Beispiel Kugelstrahlen sein. Kugelstrahlen eignet sich zum Aufbringen einer Eigenspannung und gleichzeitigen Entzunderung.

Ein zusätzliches, spannungsarmes Glühen ist nicht erforderlich, da das Abschrecken im Werkzeug weicher abläuft als im Wasser. Eine Dampfphase, wie sie beim Abschrecken im Wasser auftritt, entfällt, da das Material des zu härtenden Bereichs in direktem Kontakt zur formgebenden Werkzeugkontur steht und die zur Martensitbildung notwendige Abkühlgeschwindigkeit erreicht wird.

Alle konstruktiv vorteilhaften Konturen lassen sich genau wie beim Kaltverformen einbringen. Die offenen Enden wie auch die längsseitigen Kanten sind nicht martensitisch gehärtet, sondern kühlen an einer geregelt zugeführten Luftkühlung ab. Auf diese Weise wird ein Mischgefüge aus Ferrit, Perlit und ggf. Bainit erzeugt. Die mechanischen Kennwerte liegen in einem Bereich, der eine weitere Verformung zum fertigen Profil erlaubt.

Das Formen kann insbesondere durch Tiefziehen erfolgen. Dabei kann das Werkstück ziehtechnisch unter vollem Formzwang über seine ausgestreckte Länge zu einem der Funktion angepassten jeweilig variablen Querschnitt umgeformt werden. Das Verschließen des Werkstücks kann insbesondere mit einer Schweißnaht erfolgen.

Vorzugsweise wird das Werkstück in mehreren Schritten und unter Verwendung mehrerer Formstufen geformt und ggf. tiefgezogen. Die Verwendung eines planen Werkstücks in Kombination mit einem diskontinuierlichen Verfahren unter Einsatz eines Stempels führt dazu, dass Werkstück und Stempel zu jedem Zeitpunkt großflächigen, vorzugsweise vollständigen Kontakt haben. Die Kraft wird direkt auf das Werkstück übertragen. Dadurch wird ein mehrachsiger Spannungszustand erzeugt, der die materialspezifische Fließgrenze verringert und so die Formgebung zu komplexeren Konturen ermöglicht und unterstützt. Der Platinenschnitt für das zu formende Hohlprofil kann dabei für die zu fügenden Kanten aus einer vorab ermittelten Platinenkontur geformt werden oder während der Formgebung in der Presse in einer Beschneidestufe in ihre Endkontur fertig beschnitten werden.

Da das Werkstück bis kurz vor der Fertigstellung von beiden Seiten zugänglich ist, können Riefen oder/und Oberflächenfehler für Lebensdauer-absichernde Maßnahmen wie z.B. Oberflächenstrahlen leicht aufgefunden und behandelt werden. Das Verfahren ist besonders einfach und kostengünstig, weil ein planes Werkstück als Ausgangsmaterial eingesetzt wird statt komplexer Formen, wie etwa einem Rohr. Das Zwischenprodukt Rohr als Ausgang für die Herstellung des doppelwandigen Hohlprofils wird vermieden.

Vorzugsweise wird zunächst eine Kontur der beiden Längskanten des Werkstücks angeformt bei der die Längskanten in die gleiche Richtung (oben) gebogen werden. Die Längskanten sollen die Kontur als fertiges geschlossenes Teil annehmen.

Nach der Anformung der Kontur der Längskanten des Werkstücks kann eine im Querschnitt U- oder V-förmige Kontur im zentralen Bereich zwischen den Längskanten angeformt werden, die in die Richtung (unten) öffnet, welche der Biegerichtung der Längskanten entgegengesetzt ist. Dabei kann die für den U- oder V-Querschnitt über seine Länge vorgesehene Kontur der Innenwand über seine gesamte Länge einschließlich der Übergänge zu beiden offenen Seiten des später fertigen Profils mittels Ober- und Unterwerkzeug in einem oder mehreren Zieh- und Prägestufen geformt werden. Mit der Formgebung der Innenwand werden die beiden Umlenkradien zur Außenwand durch Konturen in den Ober- und Unterwerkzeugen vorbereitend für die Endkontur geprägt. Auch die sich anschließende Außenwandkontur bis hin zu den Längskanten wird ziehtechnisch in den folgenden Zieh- und Prägestufen geformt. In der letzten Zieh- und Prägestufe werden dann die beiden Außenwandhälften geschlossen, so dass die Längskanten formgerecht für die nachgeschaltete Schweißung voreinander stehen.

Anschließend können die Längskanten nach der Anformung der im Querschnitt U-förmigen Kontur in die der Öffnungsrichtung der U- oder V-Kontur entgegengesetzten Richtung (oben) geformt werden, so dass ein im wesentlichen W-förmiger Querschnitt mit nach innen gebogenen freien Enden entsteht. Alle Schritte können in einer besonders bevorzugten Ausgestaltung der Erfindung unter Verwendung von zwei Formstempeln durchgeführt werden. Dabei versteht sich, dass jeder Teilschritt in weitere Teilschritte mit weiteren Formstempeln aufgeteilt werden kann, falls das Material dies erfordert.

Die äußeren Schenkel der W-förmigen Kontur können anschließend aneinander anliegend geformt werden, bevor das Werkstück mit einer Schweißnaht zu einem geschlossenen Querschnitt verschlossen wird.

Vorzugsweise werden die innen liegende Oberflächen des geschlossenen Bereichs kalt geformt. Es besteht aber auch die Möglichkeit, dass die Oberflächen warm geformt werden. Dabei können die Formen durch Warmformen hergestellt werden und beschichtetes Material, insbesondere für Korrosionsschutz verwendet werden. Beim Warmformen der Profilform wird vorzugsweise die Innenwand soweit warmformtechnisch gezielt durch den direkten Kontakt zum gekühlten Ober- und Unterwerkzeug der Formstufe in den notwendigen Martensit umgewandelt, während die beiden Außenwandhälften möglichst warm gehalten werden, um ausreichendes Fließvermögen zum Schließen der beiden Außenwandhälften zu erreichen.

Das Werkstück ist vorzugsweise von Band-Material gebildet, das auch einen variable Wandstärke aufweisen kann, die z.B. mittels "Tailored Rolled Forming" hergestellt werden kann. Insbesondere kann das Werkstück aus Stahl, Aluminium oder allen anderen Nicht-Eisenmetallen bestehen.

In den Übergangsbereich zwischen Vollquerschnitt und Profilform V oder U kann eine Sicke konkav oder konvex zur Versteifung eingedrückt werden. Das entspricht dem Einprägen von Sicken in die Wand des beginnenden inneren U-/ oder V-Querschnitts des Übergangbereichs zwischen den offenen Enden und U-/-V-Profilquerschnitts.

In einer weiteren Ausgestaltung der Erfindung kann das V- oder U- Profilform im Mittenbereich eine bogenförmige Kontur besitzen. Ausgehend vom Übergangsbereich zwischen Vollquerschnitt und Profilform V in den Mittenbereich des Profils kann eine asymmetrische Schlaufenform vorgesehen sein. Eine asymmetrische Schlaufenform über die gesamte Länge des U- /V-Querschnitts bewirkt eine ungleiche Flankenverschiebung zwischen der großen und der kleinen Schlaufe in axialer Richtung und somit beim Ein-/Ausfedern der Kurvenfahrt eine ungleichmäßige Verstellung der Radspindel und ermöglicht eine neutrale Fahreigenschaft der Verbundlenkerhinterachse.

Es kann ferner im Übergangsbereich zwischen Vollquerschnitt und Profilform V eine asymmetrische Schlaufenform vorgesehen sein, während der Mittenbereich des V-oder U-Profils eine symmetrische Schlaufenform besitzt. Die asymmetrische Schlaufenform kann auch nur über die Länge des Übergangs zwischen rund, oval oder anderen Vollquerschnitt der offenen Enden und dem Beginn des U- /V-Querschnitts zur Verbesserung der Lebensdauer vorgesehen sein.

In einer Ausgestaltung der Erfindung liegt die Position der offenen Schnittkanten der geformten Platine außermittig. Die Kantenposition kann abweichend von der "12:00 Uhr" Position liegen, um z.B. eine Verprägung zwischen dem inneren und äußeren U-/V-Profil zu ermöglichen, um die Relativbewegung zwischen innerem U-/-V-Querschnitt zu reduzieren und somit die Lebensdauer im Dauertest zu verbessern.

Die offenen Enden des Vollquerschnitts des V- oder U-Profils können einen ovalen oder einen anderen Querschnitt aufweisen. Bei geraden wie auch bei den gebogenen Profilen können die offenen Rohrenden kreisrund sein oder abweichend davon einen z. B. ovalen Querschnitt haben.

Abweichend vom geraden Profil kann auch die Möglichkeit der Fertigung von gebogenen Profilen für den Einsatz von Verbundlenker Hinterachse bei 4-WD Antriebskonzepten angegeben werden. Dadurch wird Freiraum für Hinterachsdifferentialgetriebe geschaffen.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist ein Querschnitt durch ein Werkstück, nach einem ersten Tiefziehschritt.
- Fig.2: ist ein Querschnitt durch das Werkstück aus Figur 1 nach einem zweiten Tiefziehschritt.
- Fig.3: ist ein Querschnitt durch das Werkstück aus Figur 1 nach einem dritten Tiefziehschritt.
- Fig.4: ist ein Querschnitt durch das Werkstück aus Figur 1 vor dem Verschweißen.
- Fig.5: zeigt das fertig bearbeitete Werkstück als Torsionsprofil für Verbundlenkerachsen im Querschnitt.
- Fig.6: ist eine perspektivische Darstellung der vollständigen Verbundlenkerachse.
- Fig.7: zeigt ein gerades Rohrprofil.
- Fig.8: zeigt ein gebogenes Rohrprofil mit ovalen offenen Enden.
- Fig.9: zeigt ein gebogenes Rohrprofil mit kreisrunden Enden.
- Fig.10: illustriert die Lage der außermittigen Kantenposition.
- Fig.11: zeigt ein Werkstück mit asymmetrischen Schlaufen.
- Fig.12: zeigt eine Versteifungssicke im Übergangsbereich.

### Beschreibung des Ausführungsbeispiels

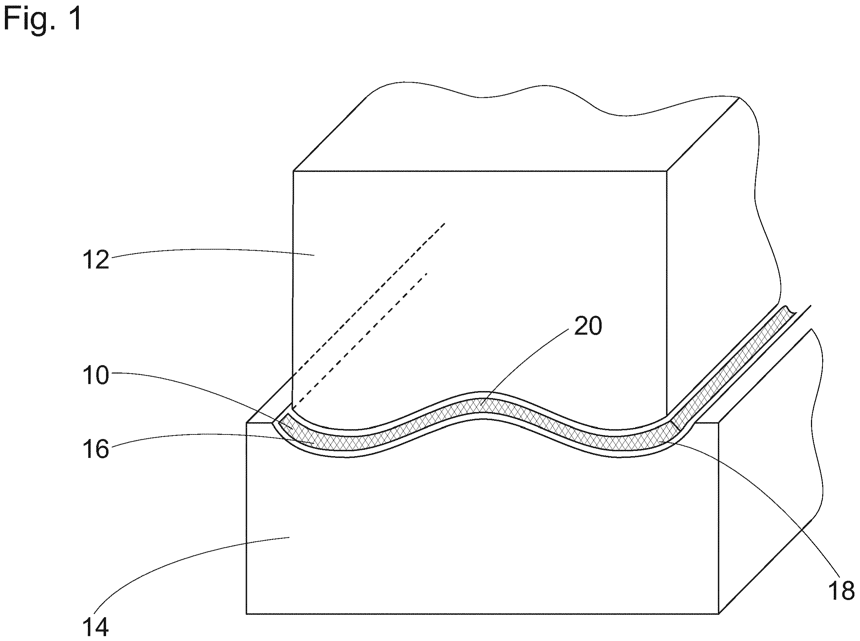

Fig.1 ist ein Querschnitt durch ein allgemein mit 10 bezeichnetes Werkstück, nach einem ersten Tiefziehschritt. Dabei wird das Werkstück 10 mit einem Stempel 12 und einer Matrize 14 kalt geformt. Man erkennt, dass die äußeren Enden 16 und 18 leicht nach oben gebogen werden. Der Krümmungsradius der Enden 16 und 18 entspricht bereits dem Krümmungsradius des fertigen Werkstücks. Der mittlere Bereich 20 wird ebenfalls vorgeformt und nach oben gebogen.

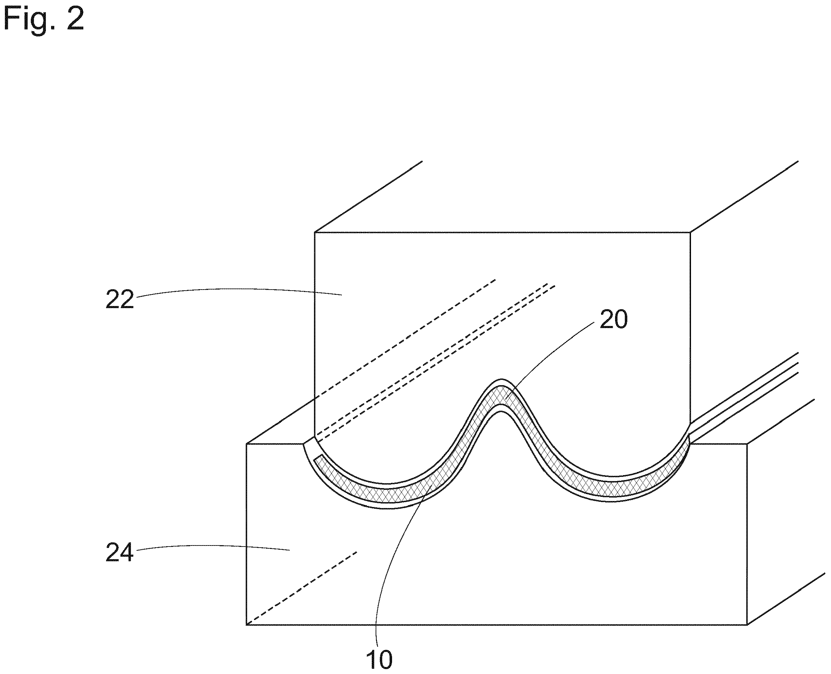

Anschließend wird das Werkstück auf 920°C in einem induktiv beheizten Ofen erhitzt. Fig.2 zeigt den Querschnitt durch das Werkstück 10 nach einem zweiten Tiefziehschritt. Dabei wird der mittlere Bereich 20 mit einem Stempel 22 und einer Matrize 24 stark zu einer U-form mit nach unten gerichteter Öffnung geformt.

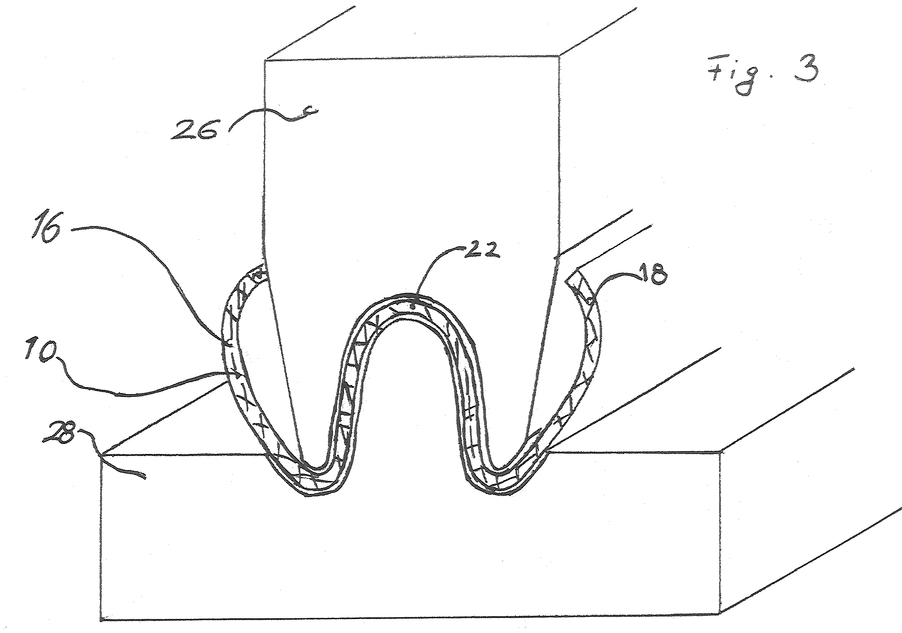

Fig.3 illustriert einen dritten Tiefziehschritt. Die Schenkel mit den Enden 16 und 18 werden dabei nach oben gebogen, so dass im Querschnitt eine W-Form entsteht. Die Enden 16 und 18 sind dabei nach innen aufeinander zugewandt geformt. Hierzu wird ein Stempel 26 und eine Matrize 28 verwendet. Stempel 26 und Matrize 28 sind wassergekühlt.

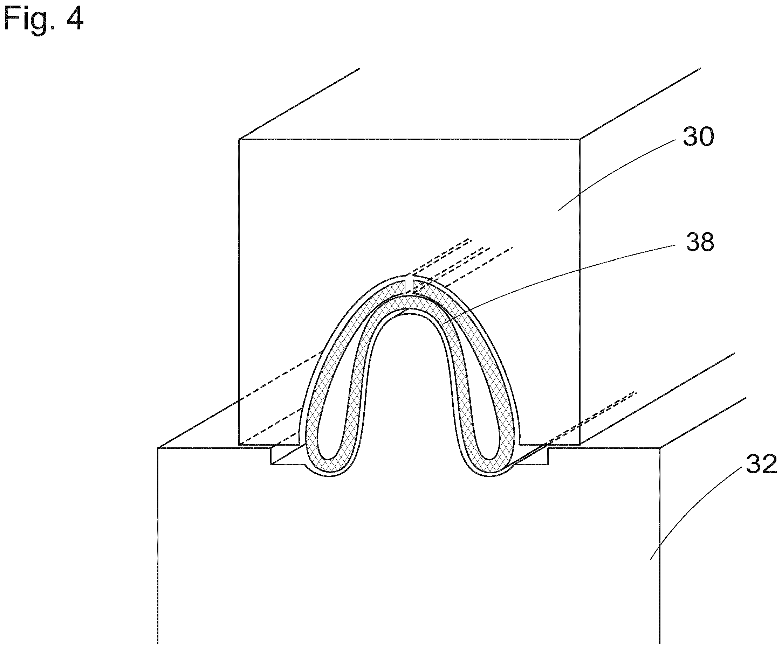

Fig.4 zeigt einen Querschnitt durch das Werkstück 10 vor dem Verschweißen. Mit einem Stempel 30 und einer Matrize 32 werden die Schenkel des Werkstücks 10 soweit zusammengebogen, dass ein geschlossenes, doppelwandiges Werkstück mit U-Form entsteht. Mit einem weiteren Stempel 34 und einer Matrize 36 werden die beiden Wandungen des Werkstücks 10 zusammengepresst. Dabei greift der bewegliche Stempel 34 anders als bei den vorhergehenden Verfahrensschritten, von "oben" in der Darstellung, d.h. auf der innenliegenden Krümmung 38 des Werkstücks 10 an. Durch diesen Verfahrensschritt werden die Kanten in Längsrichtung zusammengeführt und der Hohlraum zwischen den Wandungen wird verringert.

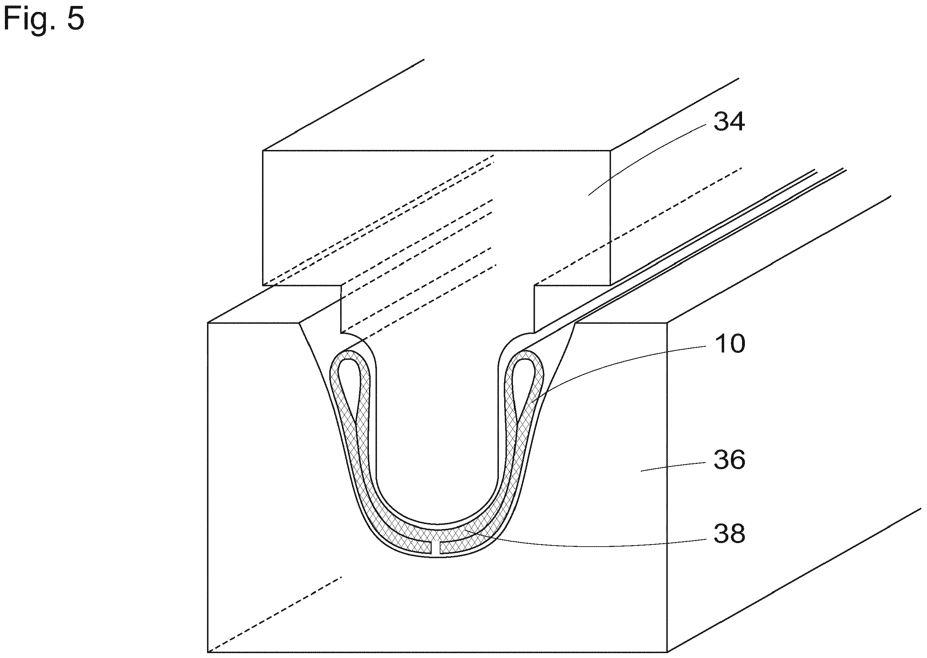

In einem letzten Schritt werden die Enden 16 und 18 miteinander verschweißt. Hierfür wird vorzugsweise ein Laser oder ein anderes Schweißverfahren wie MAG oder MIG eingesetzt. Fig.5 zeigt das fertig bearbeitete Werkstück als Torsionsprofil für Verbundlenkerachsen im Querschnitt.

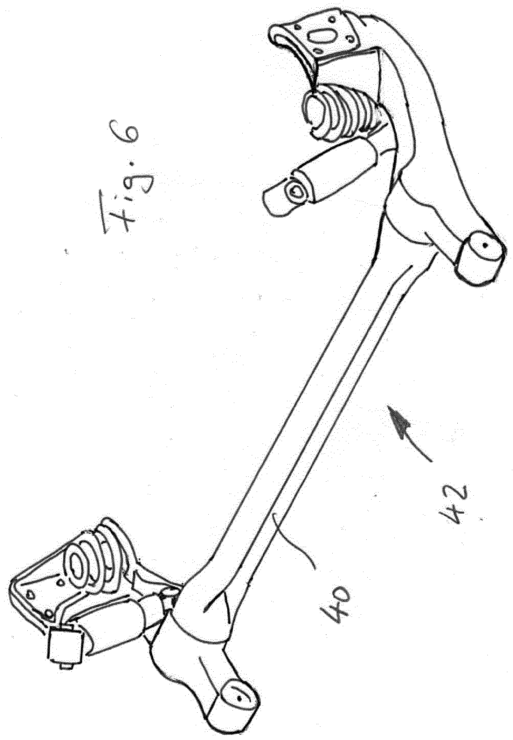

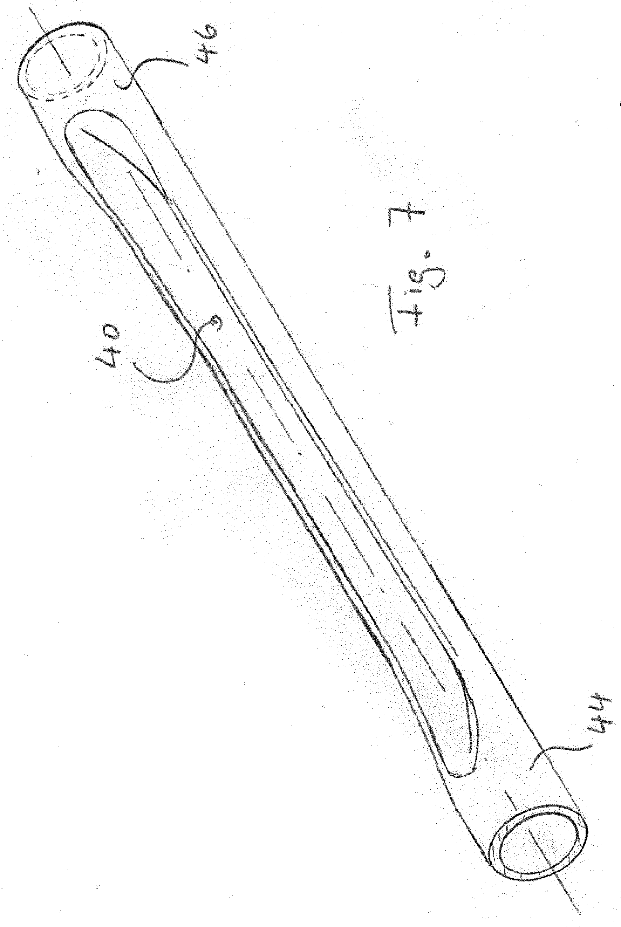

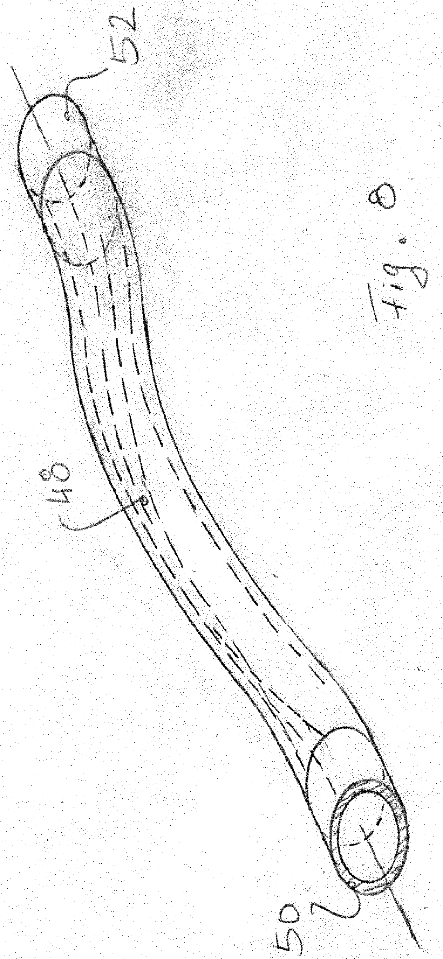

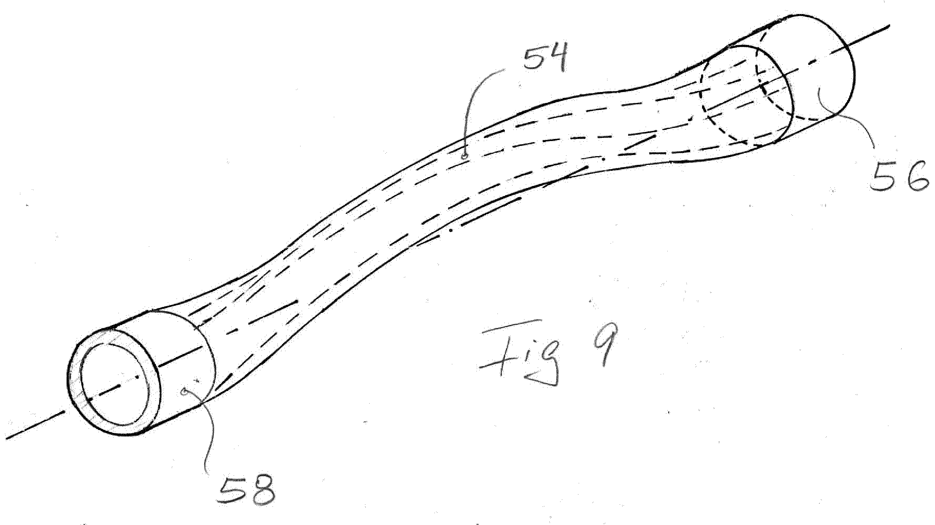

Fig.6 ist eine perspektivische Darstellung der vollständigen Verbundlenkerachse 42 als Hinterachse. Das Rohrprofil ist mit 40 bezeichnet. Fig.7 zeigt ein gerades Rohrprofil 40 für eine Verbundlenkerachse 42 aus Figur 6 mit Enden 44 und 46. Die Enden 44 und 46 des Rohrprofils können ovale oder Kreisrunde Enden haben. Fig.8 zeigt ein gebogenes Rohrprofil 48 mit ovalen offenen Enden 50 und 52. Fig.9 zeigt ein gebogenes Rohrprofil 54 mit kreisrunden Enden 56 und 58.

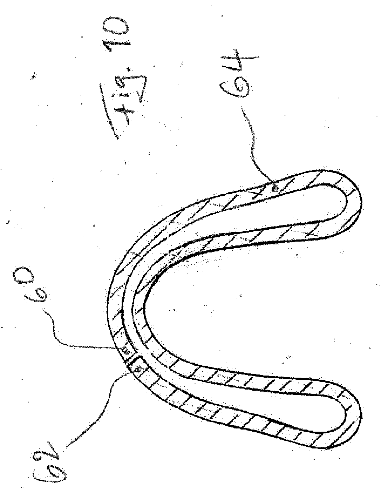

Die Kanten 60 und 62 des Rohrprofils 64 können mittig oder außermittig angeordnet sein. Fig.10 illustriert die Lage der außermittigen Kantenposition.

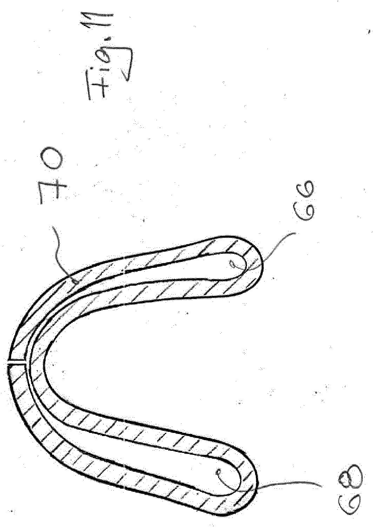

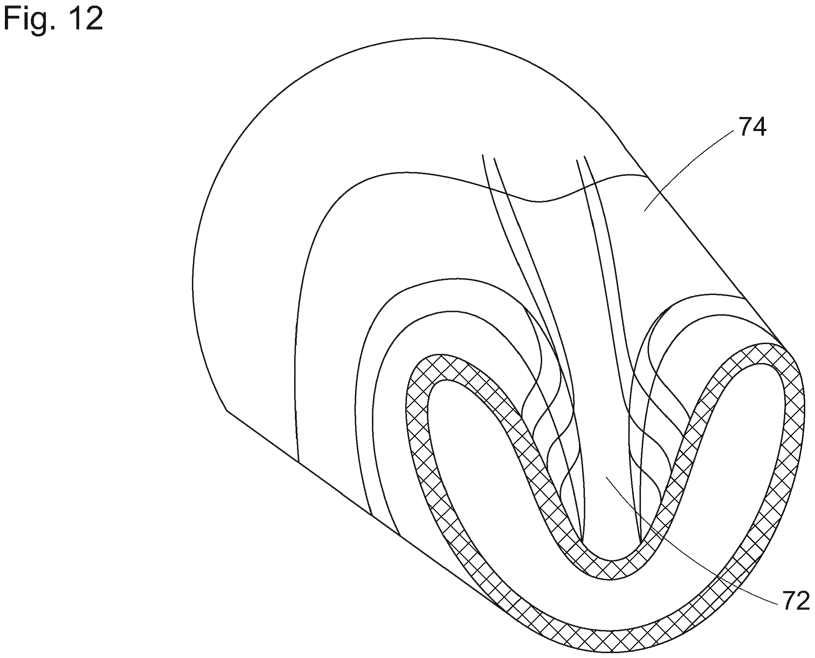

Die Schlaufen 66 und 68, d.h. die Bereiche großer Krümmung können symmetrisch oder asymmetrisch ausgebildet sein. Fig.11 zeigt ein Werkstück 70 mit asymmetrischen Schlaufen 66 und 68. Die asymmetrischen Schlaufen 66 und 68 dienen der Verbesserung der fahrdynamischen Eigenschaften. Eine Spindelplatte ist zum Einstellen eines neutralen Fahrverhaltens durch ungleichmäßige Verschiebungen der Flanken beim Ein-/Ausfedern der Kurvenfahrt vorgesehen. Fig.12 zeigt eine Versteifungssicke 72 im Übergangsbereich 74.

Das vorstehende Ausführungsbeispiel wurde konkret unter Angabe zahlreicher Details beschrieben. Es dient jedoch nur zur Illustration der Erfindung. Die Erfindung kann selbstverständlich auch auf andere Weise verwirklicht werden. Viele Maßnahmen können im Rahmen des Fachwissens geändert werden ohne vom Erfindungsgedanken abzuweichen. So ist beispielsweise eine Änderung der Anzahl der Formstufen denkbar. Auch besteht die Möglichkeit warm zu formen und Matrix und Stempel zu variieren. Eine ovale Form an den Enden ist bei gebogenen und geraden Profilen verwendbar. Der allgemeine Erfindungsgedanke wird daher nicht durch Details im Ausführungsbeispiel beschränkt, sondern lediglich durch den Schutzbereich der beigefügten Ansprüche.

## Patentansprüche

1. Verfahren zur Herstellung eines Torsionsprofils für Verbundlenkerachsen (42) von Kraftfahrzeugen, wobei
(a) die Verbundlenkerachse in einem mittleren Bereich ein Torsionsprofil (40) mit einem geschlossenen, V- oder U-förmigen, doppelwandigen Querschnitt aufweist,
(b) die Verbundlenkerachse in einem äußeren Bereich (44,46) einen im Wesentlichen rohrförmigen Querschnitt aufweist, und
(c) zwischen dem mittleren und dem äußeren Endbereich ein Übergangsbereich (74) vorgesehen ist, der zusammen mit dem mittleren und dem äußeren Bereich in einem Stück gefertigt ist, mit den Schritten:
(d) Bereitstellen eines Werkstücks (10) in Form eines von einem Coil abgetrennten Metallbands, einer Platine oder eines anderen im Wesentlichen planen Werkstücks,
(e) Formen des Werkstücks ohne ein Rohr als Zwischenprodukt zu bilden mit wenigstens einem Formstempel (12,14) an beiden Seiten, wobei jede der beiden Oberflächen des Werkstücks großflächig am zugehörigen Formstempel anliegt, und
(f) anschließendes Verschließen des Werkstücks mit einem Fügeverfahren zu einem geschlossenen Querschnitt als letzten Schritt,
**gekennzeichnet, durch die Schritte**
(g) kaltes Vorformen des noch nicht verschlossenen Werkstücks,
(h) Erhitzen des Werkstücks auf eine Temperatur oberhalb des AC3-Punktes, wenigstens oberhalb 800°C, und
(i) Formen des noch nicht verschlossenen, heißen Werkstücks mit kalten und/oder gekühlten Formstempel, wobei der Formstempel jeweils nur an dem Teil des Werkstücks anliegt, der bei diesem Schritt seine endgültige Form erhält.

2. Verfahren nach Anspruch 1, **dadurch gekennzeichnet, dass** das Werkstück in mehreren Schritten und unter Verwendung mehrerer Formstufen geformt wird.

3. Verfahren nach Anspruch 2, **dadurch gekennzeichnet, dass** zunächst eine Kontur der beiden Längskanten des Werkstücks angeformt wird, bei der die Längskanten in die gleiche Richtung (oben) gebogen werden.

4. Verfahren nach Anspruch 3, **dadurch gekennzeichnet, dass** nach der Anformung der Kontur der Längskanten des Werkstücks eine im Querschnitt U-förmige Kontur im zentralen Bereich zwischen den Längskanten angeformt wird, die in die Richtung (unten) öffnet, welche der Biegerichtung der Längskanten entgegengesetzt ist.

5. Verfahren nach Anspruch 3, **dadurch gekennzeichnet, dass** die Längskanten nach der Anformung der im Querschnitt U-förmigen Kontur in die der Öffnungsrichtung der U-Kontur entgegengesetzten Richtung (oben) geformt werden, so dass ein im wesentlichen W-förmiger Querschnitt mit nach innen gebogenen freien Enden entsteht.

6. Verfahren nach Anspruch 5, **dadurch gekennzeichnet, dass** die äußeren Schenkel der W-förmigen Kontur aneinander anliegend geformt werden, bevor das Werkstück mit einer Schweißnaht zu einem geschlossenen Querschnitt verschlossen wird.

7. Verfahren nach einem der vorgehenden Ansprüche, **dadurch gekennzeichnet, dass** die innen liegende Oberfläche des geschlossenen Bereichs des heißen Werkstücks warm mit kalten Formstempeln geformt wird.

8. Verfahren nach einem der vorgehenden Ansprüche, **dadurch gekennzeichnet, dass** die Formen durch Warmformen des heißen Werkstücks mit kalten Formstempeln hergestellt werden und beschichtetes Material, insbesondere für Korrosionsschutz verwendet wird.

9. Verfahren nach einem der vorgehenden Ansprüche, **dadurch gekennzeichnet, dass** das Werkstück von Band-Material gebildet ist, dessen Platinenschnitt vor der Formgebung ermittelt worden ist oder nach den Formstufen in einer gesonderten Beschneidestufe in seine für die Kantenfügung notwendige Endkontur beschnitten wird.

10. Verfahren nach einem der vorgehenden Ansprüche, **dadurch gekennzeichnet, dass** das Werkstück von Band-Material gebildet ist, welches mittels Tailored Rolled - Verfahren partiell reduzierte oder aufgedickte Wandstärken aufweist.

11. Verfahren nach einem der vorgehenden Ansprüche, **dadurch gekennzeichnet, dass** das Werkstück aus Stahl, Aluminium oder allen anderen Nicht-Eisenmetallen besteht.

12. Verfahren nach einem der vorgehenden Ansprüche, **dadurch gekennzeichnet, dass** in den Übergangsbereich zwischen Vollquerschnitt und Profilform V oder U eine Sicke konkav oder konvex zur Versteifung eingedrückt wird.

13. Verfahren nach einem der vorgehenden Ansprüche, **dadurch gekennzeichnet, dass** das V- oder U- Profilform im Mittenbereich eine bogenförmige Kontur besitzt.

14. Verfahren nach einem der vorgehenden Ansprüche, **dadurch gekennzeichnet, dass** ausgehend vom Übergangsbereich zwischen Vollquerschnitt und Profilform V in den Mittenbereich des Profils eine asymmetrische Schlaufenform vorgesehen ist.

15. Verfahren nach einem der vorgehenden Ansprüche, **dadurch gekennzeichnet, dass** im Übergangsbereich zwischen Vollquerschnitt und Profilform V eine asymmetrische Schlaufenform vorgesehen ist, während der Mittenbereich des V-oder U-Profils eine symmetrische Schlaufenform besitzt.

16. Verfahren nach einem der vorgehenden Ansprüche, **dadurch gekennzeichnet, dass** die Position der offenen Schnittkanten der geformten Platine außermittig liegt.

17. Verfahren nach einem der vorgehenden Ansprüche, **dadurch gekennzeichnet, dass** die offenen Enden des Vollquerschnitts des V- oder U-Profils einen ovalen oder anderen Querschnitt aufweisen.

## Claims

1. Method for manufacturing a torsion profile for twist beam axles (42) of motor vehicles, wherein
(a) in its middle range the twist beam axle has a torsion profile (40) with a closed, double-walled V- or U-shaped cross section,
(b) in its outer range (44, 46) the twist beam axle has an essentially tube-shaped cross section, and
(c) a transition range (74) is provided between the middle range and the outer range which is manufactured together with the middle and the outer range in one piece, comprising the steps of:
(d) providing a work piece (10) separated from a coil in the form of a metal strip, a blank, or any other essentially plane work piece,
(e) forming of the workpiece without forming a tube as an intermediate product with at least one forming punch (12, 14) on both sides, wherein each of the two surfaces of the work piece fits to the surface of the forming punch, and
(f) the work piece is then closed by a joining process to obtain a closed cross section as a last step,
**characterized by the steps of**
(g) cold pre-forming of the not yet closed work piece,
(h) heating the work piece to a temperature above the AC3-point at least above 800°C, and
(i) forming the not yet closed work piece with cold and/or cooled forming punches, wherein the respective forming punch only fits to the surface of such a portion of the work piece, which will obtain its final form in such step.

2. Method according to claim 1, **characterized in that** the work piece is formed in several steps using several forming steps.

3. Method according to claim 2, **characterized in that** at first a contour of the two longitudinal edges of the work piece are formed, where the longitudinal edges are bent in the same direction (upwards).

4. Method according to claim 3, **characterized in that** after the forming of the contour of the longitudinal edges of the work piece a U-shaped contour of the cross section is formed in the central range between the longitudinal edges which opens in the direction (downwards), which is opposite to the bending direction of the longitudinal edges.

5. Method according to claim 3, **characterized in that** the longitudinal edges are formed after the forming of a U-shaped contour of the cross section in a direction which is opposite to the opening direction (upwards) of the U-contour, whereby an essentially W-shaped cross section is obtained which has free ends bending inwards.

6. Method according to claim 5, **characterized in that** the outer legs of the W-shaped contour are formed spaced apart before the work piece is closed by a weldseam to a closed cross section.

7. Method according to any of the preceding claims, **characterized in that** the inner surface of the closed range of the hot work piece is formed warm with cold forming punches.

8. Method according to any of the preceding claims, **characterized in that** the forms are produced by hot forming of the hot work piece with cold form punches and coated material is used, in particular for corrosion protection.

9. Method according to any of the preceding claims, **characterized in that** the work piece is made of band material, where the board section is determined before forming or where it is cut into its final contour necessary for the edge joining in a separate cutting step after the forming steps.

10. Method according to any of the preceding claims, **characterized in that** the work piece is made of band material which is provided with partially reduced or increased thicknesses by means of tailored rolled methods.

11. Method according to any of the preceding claims, **characterized in that** the work piece consists of steel, aluminum or all other non-ferrous metals.

12. Method according to any of the preceding claims, **characterized in that** a crimp is pressed into the transitional range between the full cross section and the profiled form V or U, which is concave or convex for reinforcement.

13. Method according to any of the preceding claims, **characterized in that** the V- or U- profile shape has an arched contour in the middle range.

14. Method according to any of the preceding claims, **characterized in that** starting from the transitional range between the full cross section and the profile shape V an asymmetric loop shape is provided in in the middle range of the profile.

15. Method according to any of the preceding claims, **characterized in that** in the transitional range between the full cross section and the profile shape V an asymmetric loop shape is provided while the middle range of the V- or U- profile has a symmetric loop shape.

16. Method according to any of the preceding claims, **characterized in that** the position of the open cutting edges of the formed board are eccentric.

17. Method according to any of the preceding claims, **characterized in that** the open ends of the full cross section of the V- or U-shaped profile have an oval or other cross section.

## Revendications

1. Procédé pour la fabrication d'un profilé de torsion pour essieux barres de torsion transversales (42) de véhicules automobiles pour lequel
(a) l'essieu à bras combiné présente dans une zone médiane un profilé de torsion (40) de section transversale fermée et à double paroi, en forme de V ou de U,
(b) l'essieu barres de torsion transversales présente dans une zone extérieure (44, 46) une section transversale de forme essentiellement tubulaire, et
(c) il est prévu, entre la zone d'extrémité médiane et la zone d'extrémité extérieure, une zone de transition (74) fabriquée en une seule pièce à partir de la zone médiane et de la zone extérieure, présentant les étapes de :
(d) mise à disposition d'une pièce à usiner (10) sous forme de bande de métal coupée dans une bobine, de larget ou de toute autre pièce à usiner essentiellement plane,
(e) formage de la pièce à usiner des deux côtés à l'aide d'au moins un poinçon de formage (12, 14) sans former de tuyau en ébauche, chacune des deux surfaces de la pièce à usiner étant en contact de toute sa surface avec le poinçon de formage associé, et
(f) fermeture consécutive de la pièce à usiner à l'aide d'un procédé d'assemblage pour obtenir en dernière étape une section transversale fermée,
**caractérisé par les étapes de**
(g) préformage à froid de la pièce à usiner qui n'est pas encore fermée,
(h) chauffage de la pièce à usiner à une température supérieure au point AC3, au moins supérieure à 800°C, et
(i) formage de la pièce à usiner très chaude qui n'est pas encore fermée à l'aide d'un poinçon de formage froid et/ou refroidi, le poinçon de formage étant seulement en contact avec la partie de la pièce à usiner qui prend sa forme définitive lors de cette étape.

2. Procédé selon la revendication 1, **caractérisé en ce que** la pièce à usiner est formée en plusieurs étapes en utilisant plusieurs étapes de formage.

3. Procédé selon la revendication 2, **caractérisé en ce qu'**un contour des deux arêtes longitudinales de la pièce à usiner est d'abord formé, contour dont les arêtes longitudinales sont pliées dans le même sens (vers le haut).

4. Procédé selon la revendication 3, **caractérisé en ce qu'**après le formage du contour des arêtes longitudinales de la pièce à usiner, un contour de section transversale en forme de U qui s'ouvre dans le sens (vers le bas) opposé au sens de pliage des arêtes longitudinales est formé dans la zone centrale entre les arêtes longitudinales.

5. Procédé selon la revendication 3, **caractérisé en ce que** les arêtes longitudinales sont formées après le formage du contour de section transversale en forme de U dans le sens (vers le haut) opposé au sens d'ouverture du contour en U de sorte à avoir une section transversale essentiellement en forme de W présentant des extrémités libres pliées vers l'intérieur.

6. Procédé selon la revendication 5, **caractérisé en ce que** les branches extérieures du contour en forme de W sont formées de sorte à être en contact l'une avec l'autre avant que la pièce à usiner soit fermée à l'aide d'une soudure de sorte à former une section transversale fermée.

7. Procédé selon l'une quelconque des revendications précédentes, **caractérisé en ce que** la surface se trouvant à l'intérieur de la zone fermée de la pièce à usiner très chaude est formée à chaud à l'aide de poinçons de formage froids.

8. Procédé selon l'une quelconque des revendications précédentes, **caractérisé en ce que** les formes sont réalisées par formage à chaud de la pièce à usiner très chaude à l'aide de poinçons de formage froids et un matériau recouvert d'un enduit, notamment anticorrosif, est utilisé.

9. Procédé selon l'une quelconque des revendications précédentes, **caractérisé en ce que** la pièce est formée d'un matériau en bande dont la matrice de découpage a été déterminée avant la mise en forme ou le contour de la pièce est amené à sa forme définitive nécessaire à l'assemblage des arêtes au cours d'une étape de détourage.

10. Procédé selon l'une quelconque des revendications précédentes, **caractérisé en ce que** la pièce est formée d'un matériau en bande présentant des parois à l'épaisseur augmentée ou partiellement réduite au moyen d'un procédé de roulage sur mesure.

11. Procédé selon l'une quelconque des revendications précédentes, **caractérisé en ce que** la pièce se compose d'acier, d'aluminium ou de tout autre métal non-ferreux.

12. Procédé selon l'une quelconque des revendications précédentes, **caractérisé en ce que,** pour la rigidité de la pièce, une moulure est façonnée en creux ou en relief dans la zone de transition entre la section transversale pleine et la forme de profil en V ou en U.

13. Procédé selon l'une quelconque des revendications précédentes, **caractérisé en ce que** la forme de profil en V ou en U possède un contour en forme d'arc dans la zone médiane.

14. Procédé selon l'une quelconque des revendications précédentes, **caractérisé en ce qu'**une forme de boucle asymétrique est prévue depuis la zone de transition entre la section transversale pleine et la forme de profil en V jusqu'à la zone médiane du profilé.

15. Procédé selon l'une quelconque des revendications précédentes, **caractérisé en ce qu'**une forme de boucle asymétrique est prévue dans la zone de transition entre la section transversale pleine et la forme de profil en V alors que la zone médiane du profil en V ou en U possède une forme de boucle symétrique.

16. Procédé selon l'une quelconque des revendications précédentes, **caractérisé en ce que** la position des arêtes de coupe ouvertes du larget formé est excentrée.

17. Procédé selon l'une quelconque des revendications précédentes, **caractérisé en ce que** les extrémités ouvertes de la section transversale pleine du profil en V ou en U présentent une section transversale ovale ou autre.
